# EUROPÄISCHE PATENTSCHRIFT

(11) **EP 3 073 165 B1**
(45) Veröffentlichungstag und Bekanntmachung des Hinweises auf die Patenterteilung: **18.10.2017**
(21) Anmeldenummer: 16160405.3
(22) Anmeldetag: 15.03.2016
(51) Int. Cl.: F16L 21/02, F16L 21/03, F16L 47/08

(54) **ROHR ODER ROHRFORMTEIL**
PIPE OR TUBULAR MOLDED PART
TUYAU ET PIECE TUBULAIRE

(30) Priorität: 25.03.2015 DE 202015101512 U
(43) Veröffentlichungstag der Anmeldung: 28.09.2016
(73) Patentinhaber: REHAU AG + Co, 95111 Rehau (DE)
(72) Erfinder: Rohmer, Harald, 91056 Erlangen (DE); Hendel, Roland, 91086 Aurachtal (DE); Kania, Guido, 91080 Marloffstein (DE); Leihbecher, Heiko, 90596 Schwanstetten (DE); Sieber, Jürgen, 91074 Herzogenaurach (DE)

(56) Entgegenhaltungen:
- US-A- 2 131 839
- US-A- 3 563 574
- US-A1- 2004 140 625

## Beschreibung

Die Erfindung betrifft ein Rohr oder Rohrformteil, das an einem Endabschnitt eine Muffe aufweist, um damit eine fluiddichte Verbindung zu einem weiteren Rohr oder Rohrformteil herzustellen. Weiterhin betrifft die Erfindung ein Rohrsystem mit einem Rohr oder einem Rohrformteil.

Rohre oder Rohrformteile werden in den verschiedensten Anwendungen eingesetzt, um damit Rohrsysteme herzustellen, wozu die Rohre oder Rohrformteile fluiddicht miteinander verbunden werden.

Eine sehr verbreitete Verbindungstechnik ist hierbei das Vorsehen von Muffen an Endabschnitten von Rohren oder Rohrformteilen, die es gestatten, dass das eine zur Muffe passende Ende eines zu verbindenden Rohres oder Rohrformteiles in diese Muffe eingesteckt wird und damit die fluiddichte Verbindung geschaffen ist.

Diese Verbindungstechnik ist einfach, sicher und kostengünstig. Aus der Druckschrift US 3 563 574 A ist eine Rohrkupplung bekannt, die aus Polymermaterial besteht und eingerichtet ist, die Enden von Rohren miteinander zu verbinden, wobei die Bewegung der Enden der Rohre in der Rohrkupplung begrenzt sein soll, indem geneigte, voneinander beabstandete Anlageflächen vorgesehen sind. Die Druckschrift US 2 131 839 A betrifft eine Rohrkupplung zur Verbindung von zwei Rohren, mit einem zur Mitte der Rohrkupplung stetig abnehmenden Durchmesser, wobei die Innenwände glatt ausgeführt sind und eine Nut aufweisen, in der ein Dichtungsstreifen eingelegt ist, der bei Einführung eines Rohres in die Rohrkupplung komprimiert wird und so eine Dichtfunktion zum Rohr hin bewirkt. Nachteilig bei dieser Muffenverbindungstechnik ist jedoch, dass bei nicht sachgerechtem Einbau eines Rohrsystems unter der Erde bzw. bei Verlagerungen des das Rohrsystem umgebenden Erdreichs an solchen Muffenverbindungen Undichtigkeiten auftreten können, wodurch Fluid aus dem Rohrsystem in das umgebende Erdreich oder Fluid vom umgebenden Erdreich in das Rohrsystem gelangen kann, was höchst unerwünscht ist.

So kann es beispielsweise dazu kommen, dass bei einem nicht sachgerechten Einbau eines Rohrsystems in einem Graben durch eine Verlagerung des Erdreichs und / oder des Rohrsystems das verbundene Rohr relativ zur Muffe des Rohres eine Querschnittsänderung an der Muffe eintritt, die dazu führt, dass es zu einer Spaltbildung im Bereich des Endes des angeschlossenen Rohres zur Muffe hin kommt. An dieser Stelle kommt es dann zur Undichtigkeit.

Auch ist es möglich, dass es beispielsweise durch sehr hohe aufgebrachte Lasten in einem verfüllten Graben zu Verlagerungen im Erdreich kommt, die ebenfalls zu Querschnittsänderungen im Bereich der Muffe und des eingesteckten Endes eines Rohres oder Rohrformteiles führt, was zu den beschriebenen Undichtigkeiten führt.

Hier setzt die Erfindung ein, deren Aufgabe es ist, ein Rohr oder Rohrformteil mit einer gegenüber dem Stand der Technik verbesserten Muffe anzugeben. Eine weitere Aufgabe der vorliegenden Erfindung ist es, ein Rohrsystem anzugeben, welches ein solches Rohr oder Rohrformteil beinhaltet.

Die Lösung der Aufgabe, ein Rohr oder Rohrformteil mit einer gegenüber dem Stand der Technik verbesserten Muffe anzugeben, erfolgt gemäß Anspruch 1. Es wurde im Rahmen der vorliegenden Erfindung erkannt, dass ein Rohr oder Rohrformteil mit einer an einem Endabschnitt angeordneten Muffe zur fluiddichten Verbindung des Rohres oder Rohrformteils mit einem Bauelement die oben geschilderten Nachteil des Standes der Technik überwindet, wenn vorgesehen ist, dass diese Muffe wie folgt gestaltet ist:
Die Muffe weist eine Sicke an der Innenoberfläche der Wandung zur Aufnahme eines Dichtungselements auf, wobei die Sicke nutförmig gestaltet ist und von einer ersten Sickenflanke, die dem Ende des Rohres oder Rohrformteils zugeordnet ist, einem Sickengrund und einer zweiten Sickenflanke, die vom Ende des Rohres oder Rohrformteils entfernt ist, die von der Innenoberfläche der Wandung des Rohres oder Rohrformteils gebildet sind, begrenzt ist und sich dadurch auszeichnet, dass der Sickengrund eine Wandstärke aufweist, die im Bereich der zweiten Sickenflanke größer ist als im Bereich der ersten Sickenflanke.

Auf diese Weise wird eine Muffe bereitgestellt, die unterschiedliche Wanddicken im Bereich des Sickengrundes aufweist, wobei die Wandstärke an der dem Ende gegenüberliegenden Seite des Sickengrundes größer ist, als am Ende des Rohres oder Rohrformteils.

Erfindungswesentlich ist dabei, dass der Sickengrund nur an der entscheidenden Stelle verdickt ist, wodurch die Muffe im Hinblick eines möglichen auf sie ausgeübten Kippmomentes besonders steif wird.

Würde man am Sickengrund in seiner gesamten Ausdehnung eine verdickte Wandung realisieren, so würde die Sicke zu steif werden, so dass die erforderliche Flexibilität verloren ginge.

Durch das Vorsehen, dass die Kontur, der Querschnitt und die Abmessungen der Sicke sich bei der vorliegenden Erfindung im Vergleich zum Stand der Technik nicht ändern, können weiterhin in vorteilhafter Weise standardisierte Dichtungen verwendet werden.

Die Verdickung der Wandung im Bereich des Sickengrundes ist dabei erfindungsgemäß derart ausgeführt, dass der äußere Durchmesser des Rohres oder Rohrformteils im Bereich des Sickengrundes vom Ende des Rohres oder Rohrformteils hin zur dem Ende des Rohres oder Rohrformteils gegenüberliegenden Seite des Sickengrundes zunimmt. Hierzu ist vorgesehen, dass sich die Wandstärke entsprechend ändert, dass also das "zusätzliche" Material der Wandung an deren Außenseite angeordnet ist.

Auf diese Weise ist mit vergleichsweise wenig zusätzlichem Material für die erfindungsgemäß vorgesehene erhöhte Wandstärke im durch Kippmomente besonders beanspruchten Bereich eine gegenüber dem Stand der Technik entscheidend verbesserte Muffe bereitgestellt.

Im Rahmen der vorliegenden Erfindung sind mit "Bauelementen" stets solche gemeint, die einen Endabschnitt aufweisen, der geeignet ist, in die Muffe eingeführt zu werden. Der Endabschnitt ist dazu im Allgemeinen rohrförmig bzw. als Rohrabschnitt ausgebildet. Weiterhin sind durch die vorliegende Erfindung auch Schächte als Bauelemente umfasst, soweit diese einen Anschluss im Sinne eines "Endabschnittes" aufweisen, der ebenso geeignet ist, in eine Muffe eingeführt zu werden.

Es kann in diesem Zusammenhang auch sein, dass am Schacht ein Endabschnitt eines Anschlusses ausgebildet ist, der eine Muffe gemäß vorliegender Erfindung aufweist, insofern ist ein derartiger Schacht hier unter "Rohr oder Rohrformteil" zu subsummieren.

Durch die vorliegende Erfindung wird eine Verbindungstechnik bereitgestellt, die auf einer Muffe basiert und die stabil und gegenüber der Einwirkung von Kräften widerstandsfähiger ist, als die aus dem Stand der Technik bekannten Muffenverbindungssysteme.

Die aus dem Stand der Technik bekannten Muffenverbindungssysteme sind so ausgestaltet, dass die Wanddicke im Bereich der Muffe an allen Stellen gleich ist.

Durch die Maßnahme gemäß der vorliegenden Erfindung können Kräfte, die durch Verlagerungen eines mit der Muffe verbunden Bauelements auftreten, besser aufgenommen werden, wodurch die Gefahr der Verformung verringert bzw. ganz ausgeschlossen ist. Undichtigkeiten in der vorstehend beschriebenen Art, die durch Verlagerungen von Erdreich bzw. durch Ausübung von Kräften auf die Muffe bzw. das angeschlossene Bauelement ausgeübt werden, werden so verringert bzw. ganz erheblich reduziert. Es ergibt sich somit eine stabilere und insbesondere belastbarere Verbindung von Rohren / Rohrformteilen und Bauelementen.

Es hat sich im Rahmen der vorliegenden Erfindung als ganz besonders günstig erwiesen, wenn vorgesehen ist, dass sich die Wandstärke des Sickengrunds kontinuierlich vom Bereich der ersten Sickenflanke zum Bereich der zweiten Sickenflanke hin vergrößert. Durch diese Maßnahme ist sichergestellt, dass die Muffe auftretende Kräfte sicher aufnehmen kann und das insbesondere die Gefahr eines möglichen Bruches im Bereich des Sickengrundes ausgeschlossen werden kann.

Es hat sich dabei als sehr vorteilhaft herausgestellt, wenn vorgesehen ist, dass die Wandstärke im Bereich der zweiten Sickenflanke 30 bis 100 %, bevorzugt 50 bis 80 % größer ist, als im Bereich der ersten Sickenflanke. Durch die Wahl der Wandstärke kann die Stabilität der Muffe in ausreichender Weise angepasst werden an erwartete Kräfte, die von der Muffe aufzunehmen sind. Erfindungsgemäß ist vorgesehen, dass das Rohr oder Rohrformteil derartig gestaltet ist, dass die Außenoberfläche der Wandung im Bereich des Sickengrundes als eine Kegelmantelabschnittsfläche ausgebildet ist. Die Ausbildung einer solchen Kegelmantelabschnittsfläche im Bereich des Sickengrundes kann sehr vorteilhaft dafür genutzt werden, dass beim Einschieben des zu verbindenden Rohres oder Rohrformteils in die Muffe eine sehr günstige Gegenhaltung erfolgen kann.

Es hat sich im Rahmen der vorliegenden Erfindung als günstig erwiesen, wenn vorgesehen ist, dass die Innenoberfläche und die Außenoberfläche im Bereich des Sickengrundes einen Winkel von 5 bis 25 °, bevorzugt von 8 bis 20 ° einschließen.

Ein solcher Winkel zwischen der Innenoberfläche und der Außenoberfläche im Bereich des Sickengrundes stabilisiert die Muffe und erhöht die Fähigkeit der Muffe, Kräfte aufzunehmen und in das Rohr einzuleiten ganz besonders.

Als sehr vorteilhaft hat sich erwiesen, wenn vorgesehen ist, dass das Rohr oder Rohrformteil gemäß vorliegender Erfindung derartig ausgestaltet ist, dass alle Radien an der Muffe verrundet sind. Die Verrundung der Radien ermöglicht es ein Rohr oder Rohrformteil fluiddicht in einfacher Weise anzuschließen. Weiterhin kann dadurch das in die Sicke einzulegende Dichtungselement dort in einfacher Weise positioniert werden. Mögliche Beschädigungen lassen sich auf diese Weise vermeiden.

Als überaus günstig hat sich bei der vorliegenden Erfindung erwiesen, wenn vorgesehen ist, dass das Rohr oder Rohrformteil derart gebildet ist, das die Wandung ein Polymermaterial enthält oder aus einem solchen besteht, wobei das Polymermaterial ausgewählt ist aus einem Polyolefin, vorzugsweise aus einem Polypropylen (PP) oder einem Polyethylen (PE) oder einem Polybutylen (PB), einem vernetzten Polyolefin, vorzugsweise einem vernetzten Polyethylen (PE-X) einem Polyvinylchlorid, einem Polyamid, einem Polyester, einem Polystyrol, einem Polycarbonat, einem Polyacetat, einem Polyurethan, einem ABS (AcrylnitrilButadien-Styrol), einem Polyether, einem Polyketon, einer aus diesen herstellbaren Mischung, einem aus diesen herstellbares Copolymerisat und einer aus diesen herstellbare Mischzusammensetzung.

Die vorstehend bezeichneten Polymermaterialien sind inert und resistent gegen die im Rohr oder Rohrformteil aufzunehmenden Fluide, langlebig, widerstandsfähig, vergleichsweise einfach verarbeitbar, schlagfest, flexibel und kostengünstig.

In einer bevorzugten Ausführungsform der vorliegenden Erfindung ist vorgesehen, dass das Rohr oder Rohrformteil wenigstens zwei Muffen wie vorstehend beschrieben aufweist.

Es kann sich z.B. um ein Rohr handeln, das an beiden Endabschnitten jeweils eine solche Muffe aufweist. In einer anderen Ausführungsform sind damit beispielsweise Bögen, Reduzierstücke, T-Stücke, Y-Stücke, Blindstopfen und andere Bauteile mehr umfasst, mit denen ein Rohrsystem aufbaubar ist.

Ein solches Bauteil, bei dem zwei Muffen ausgebildet sind, ist eine sog. Doppelsteckmuffe. Eine solche Doppelsteckmuffe stellt ein sehr kurzes Rohr dar, das an beiden Endabschnitten eine Muffe aufweist. Es dient dazu, dass Bauelemente, wie Rohre oder Rohrformteile in einfacher Weise mit weiteren Bauelementen, wie Rohren oder Rohrformteilen verbunden werden, wobei die Rohre oder Rohrformteile über ihre Enden mit der Doppelsteckmuffe fluiddicht verbunden werden.

An ihrer Innenoberfläche ist ein Anschlag ausgebildet, bis zu den jeweils das Bauelement, beispielsweise das Rohr oder Rohrformteil einführbar ist. Auf diese Weise kann das Rohr oder Rohrformteil in definierter Weise in die Doppelsteckmuffe eingeführt werden und sitzt dann sicher.

Eine solche Doppelsteckmuffe ist im Allgemeinen rotationssymmetrisch aufgebaut und weist eine Spiegelebene in der Ebene des an ihrer Innenoberfläche ausgebildeten Anschlags auf.

In einer anderen Ausführungsform kann das Bauteil eine Überschiebmuffe sein. Eine solche Überschiebmuffe weist zwei Muffen auf. Sie besitzt keinen Anschlag an der Innenoberfläche. Auf diese Weise kann sie beliebig weit auf das Ende eines Bauelements, wie beispielsweise eines Rohres oder Rohrformteils aufgeschoben werden.

Von besonderem Vorteil ist es im Rahmen der vorliegenden Erfindung, wenn die Muffe einstückig mit dem Rohr ausgebildet ist. Die Muffe ist dann ganz besonders stabil. Sie ist bevorzugt in einem Spritzgussprozess geformt. Andere Herstelltechniken sind auch möglich, wie beispielsweise eine Extrusionsprozess, bei dem eine variable Wanddicke ausbildbar ist.

Die Aufgabe der vorliegenden Erfindung, ein Rohrsystem anzugeben, findet ihre Lösung in Anspruch 10. Es wurde im Rahmen der vorliegenden Erfindung erkannt, dass ein Rohrsystem bereitstellbar ist, das ein Rohr oder ein Rohrformteil gemäß vorstehender Beschreibung umfasst. Hierdurch ist bei dem erfindungsgemäßen Rohrsystem eine verbesserte Dichtheit gegeben.

Anwendung findet die vorliegende Erfindung im Bereich der drucklosen Leitungen zur Aufnahme, Leitung und Speicherung von Fluiden. Dies betrifft in erster Linie Systeme für die Abwasser- und solche für die Regenwasserbewirtschaftung. Aber auch in anderen Bereichen, wie beispielsweise der Schwimmbadtechnik, der Landwirtschaft, der Lebensmittel- und Getränkeindustrie, dem Maschinenbau und anderen Anwendungsfeldern kann die Erfindung vorteilhaft genutzt werden.

Weitere wichtige Merkmale und Vorteile der Erfindung ergeben sich aus den Unteransprüchen, aus den Fig. und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Fig. dargestellt und werden in der nachfolgenden Beschreibung näher erläutert, wobei sich gleiche Bezugszeichen auf gleiche oder funktional gleiche oder ähnliche Bauteile beziehen.

Die vorliegende Erfindung wird anhand der beigefügten Figuren wie folgt näher beschrieben.

Hierzu zeigt:
- Fig. 1: eine schematische Querschnittsansicht eines Rohres mit einer Muffe;
- Fig. 2: eine schematische Querschnittsansicht einer Muffe am Endabschnitt eines Rohres;
- Fig. 3: eine schematische perspektivische Ansicht einer Doppelsteckmuffe.

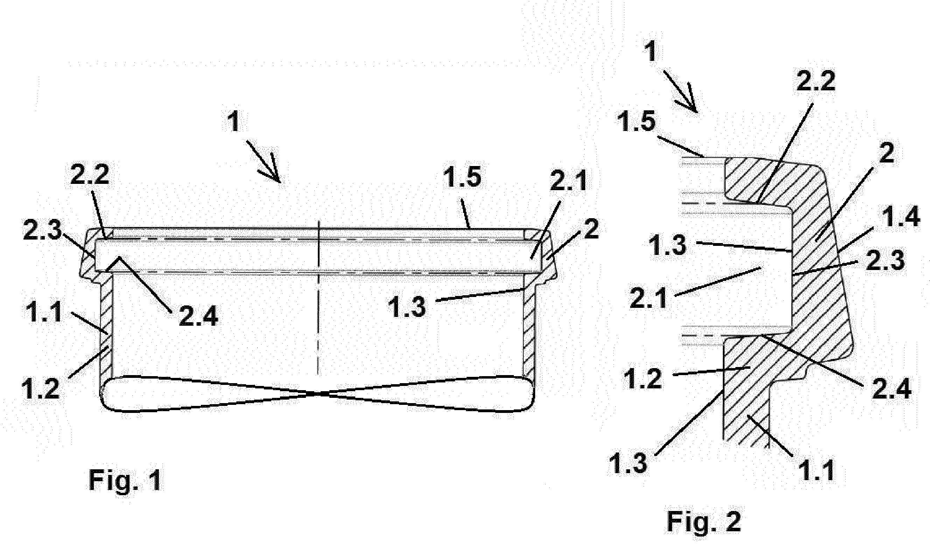

In Fig.1 ist eine schematische Querschnittsansicht eines Rohres 1 mit einer Muffe 2 am Endabschnitt 1.1 des Rohres 1 gezeigt. Das Rohr 1 weist einen im Wesentlichen kreisrunden Querschnitt auf und wird von der Wandung 1.2 gebildet. Am Endabschnitt 1.1 des Rohres 1 ist eine Muffe 2 ausgebildet, die eine Sicke 2.1 aufweist. Die Muffe 2 ist einstückig mit dem Rohr 1 ausgebildet. Sie ist bevorzugt in einem Spritzgussprozess geformt. In die Sicke 2.1 der Muffe 2 des Rohres 1, die nutförmig gestaltet ist, ist ein Dichtungselement einbringbar, das im Folgenden nicht gezeigt ist. Ein solches Dichtungselement kann beispielsweise aus einem elastomeren Material bestehen und seine Dichtwirkung durch Kompression entfalten. Geeignet sind hierzu beispielsweise Rundschnüre. Andere Dichtelemente in vielfältigen Formen sind ebenso geeignet.

Die Sicke 2.1 an der Muffe 2 wird begrenzt von einer Sickenflanke 2.2, die das Ende 1.5 des Rohres 1 bildet. Sie steht etwa im rechten Winkel zur Achse des Rohres 1. Etwa im rechten Winkel anschließend an die erste Sickenflanke 2.2 ist ein Sickengrund 2.3 ausgebildet, diese ist etwa parallel zur Achse des Rohres 1 ausgerichtet. Anschließend an den Sickengrund 2.3 ist dann eine zweite Sickenflanke 2.4 ausgebildet, die in etwa im rechten Winkel von dem Sickengrund zum Inneren des Rohres hin weg steht und damit wieder etwa senkrecht zur Achse des Rohres 1 ausgerichtet ist.

Die erste Sickenflanke 2.2, der Sickengrund 2.3 und die zweite Sickenflanke 2.4 bilden die etwa nutförmig gestaltete Sicke 2.1 der Muffe 2. Die nutförmige Sicke 2.1 der Muffe 2 ist an der Innenoberfläche 1.3 des Rohres 1 ausgebildet.

In Fig. 2 ist in einer schematischen Querschnittsansicht eine Muffe 2 am Endabschnitt 1.1 eines Rohres 1 gezeigt. Die etwa nutförmig ausgebildet Sicke 2.1 der Muffe 2 wird von der ersten Sickenflanke 2.2, dem Sickengrund 2.3 und der zweiten Sickenflanke 2.4 begrenzt.

Die Wandung 1.2 ist im Bereich der ersten Sickenflanke 2.2 und der zweiten Sickenflanke 2.4 in etwa gleich. Die Wandstärke der Wandung 1.2 im Bereich des Sickengrundes 2.3 nimmt dabei vom Bereich der ersten Sickenflanke 2.2 zum Bereich der zweiten Sickenflanke 2.4 hin kontinuierlich zu, so dass im Querschnitt eine konische Wandung im Bereich des Sickengrundes ausgebildet ist, die in Richtung des Endes 1.5 des Rohres 1 spitz zuläuft. Hindurch ist eine größere Wandstärke der Wandung 1.2 des Sickengrundes 2.3 im Bereich der zweiten Sickenflanke 2.4 ausgebildet, als im Bereich der ersten Sickenflanke 2.2, wodurch die erhöhte Stabilität der Muffe 2 resultiert.

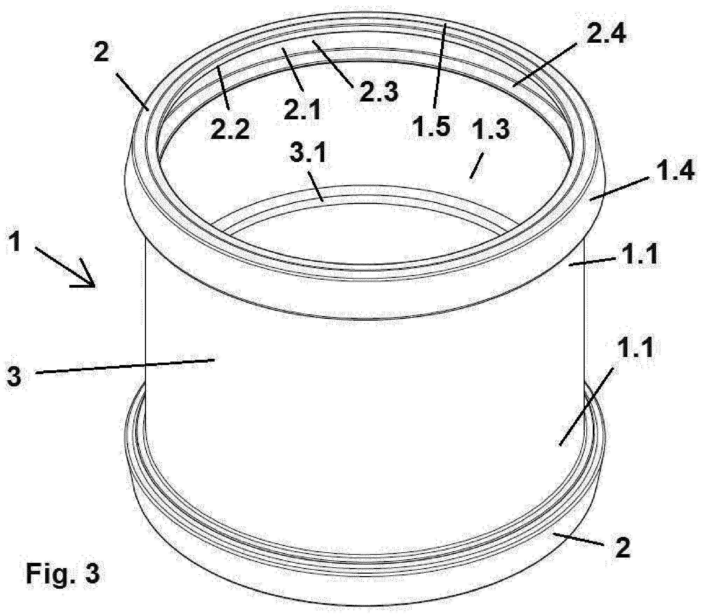

In Fig. 3 ist in einer schematischen perspektivischen Ansicht eine Doppelsteckmuffe 3 gezeigt. Die Doppelsteckmuffe 3 ist als kurzer Abschnitt eines Rohres 1 ausgebildet, das entsprechend zwei Endabschnitte 1.1, 1.1 aufweist. An beiden Endabschnitten 1.1, 1.1 ist jeweils eine Muffe 2 entsprechend der Beschreibung von Fig. 1 und Fig. 2 ausgebildet.

An der Innenoberfläche 1.3 der Doppelsteckmuffe 3 ist etwa mittig zwischen den beiden Muffen 2 ein Anschlag 3.1 vorgesehen, der in Form einer hervorstehenden Rippe um den gesamten Innenumfang herum laufend ausgebildet ist.

Der Anschlag 3.1 dient dazu, ein Bauelement in definierter Weise bis zum Anschlag 3.1 in die Doppelsteckmuffe 3 einzuführen. Dies kann entsprechend von beiden Seiten durch die beiden Muffen 2 hindurch erfolgen. Auf diese Weise ist eine fluiddichte Verbindung zwischen der Doppelsteckmuffe 3 und einem Bauelement bzw. zwei Bauelementen herstellbar.

### Bezugszeichenliste

- 1: Rohr oder Rohrformteil
- 1.1: Endabschnitt
- 1.2: Wandung
- 1.3: Innenoberfläche
- 1.4: Außenoberfläche
- 1.5: Ende
- 2: Muffe
- 2.1: Sicke
- 2.2: erste Sickenflanke
- 2.3: Sickengrund
- 2.4: zweite Sickenflanke
- 3: Doppelsteckmuffe
- 3.1: Anschlag

## Patentansprüche

1. Rohr oder Rohrformteil (1) mit einer an einem Endabschnitt (1.1) angeordneten Muffe (2) zur fluiddichten Verbindung des Rohres oder Rohrformteils (1) mit einem Bauelement, die eine Sicke (2.1) an der Innenoberfläche (1.3) der Wandung (1.2) zur Aufnahme eines Dichtungselements aufweist, wobei die Sicke (2.1) nutförmig gestaltet und von einer ersten Sickenflanke (2.2), die dem Ende (1.5) des Rohres oder Rohrformteils (1) zugeordnet ist, einem Sickengrund (2.3) und einer zweiten Sickenflanke (2.4), die vom Ende (1.5) des Rohres oder Rohrformteils (1) entfernt ist, die von der Innenoberfläche (1.3) der Wandung (1.2) des Rohres oder Rohrformteils (1) gebildet sind, begrenzt ist, und wobei der Sickengrund (2.3) eine Wandstärke aufweist, die im Bereich der zweiten Sickenflanke (2.4) größer ist, als im Bereich der ersten Sickenflanke (2.2), **dadurch gekennzeichnet, dass** die Außenoberfläche (1.4) der Wandung (1.2) im Bereich des Sickengrundes (2.3) als eine Kegelmantelabschnittsfläche ausgebildet ist.

2. Rohr oder Rohrformteil (1) nach Anspruch 1, **dadurch gekennzeichnet, dass** sich die Wandstärke des Sickengrunds (2.3) kontinuierlich vom Bereich der ersten Sickenflanke (2.2) zum Bereich der zweiten Sickenflanke (2.4) hin vergrößert.

3. Rohr oder Rohrformteil (1) nach Anspruch 1 oder 2, **dadurch gekennzeichnet, dass** die Wandstärke im Bereich der zweiten Sickenflanke (2.4) 30 bis 100 %, bevorzugt 50 bis 80 % größer ist, als die im Bereich der ersten Sickenflanke (2.2).

4. Rohr oder Rohrformteil (1) nach einem der vorangehenden Ansprüche, **dadurch gekennzeichnet, dass** die Innenoberfläche (1.3) und die Außenoberfläche (1.4) im Bereich des Sickengrundes (2.3) einen Winkel von 5 bis 25 °, bevorzugt von 8 bis 20 ° einschließen.

5. Rohr oder Rohrformteil (1) nach einem der vorangehenden Ansprüche, **dadurch gekennzeichnet, dass** alle Radien an der Muffe (2) verrundet sind.

6. Rohr oder Rohrformteil (1) nach einem der vorangehenden Ansprüche, **dadurch gekennzeichnet, dass** die Wandung ein Polymermaterial enthält oder aus einem solchen besteht, wobei das Polymermaterial ausgewählt ist aus einem Polyolefin, vorzugsweise einem Polypropylen (PP) oder einem Polyethylen (PE) oder einem Polybutylen (PB), einem vernetzten Polyolefin, vorzugsweise einem vernetzten Polyethylen (PE-X), einem Polyvinylchlorid, einem Polyamid, einem Polyester, einem Polystyrol, einem Polycarbonat, einem Polyacetat, einem Polyurethan, einem ABS (Acrylnitril-Butadien-Styrol), einem Polyether, einem Polyketon, einer aus diesen herstellbare Mischung, einem aus diesen herstellbares Copolymerisat und einer aus diesen herstellbare Mischzusammensetzung.

7. Rohr oder Rohrformteil (1) nach einem der Ansprüche 1 bis 6 mit wenigstens zwei Muffen (2).

8. Rohr oder Rohrformteil (1) nach Anspruch 7, das als Doppelsteckmuffe (3) oder Überschiebmuffe ausgebildet ist.

9. Rohrsystem mit einem Rohr oder Rohrformteil (1) nach einem der Ansprüche 1 bis 8.

## Claims

1. A pipe or tubular moulded part (1) having a sleeve (2) disposed on an end section (1.1) for the fluid-tight connection of the pipe or tubular moulded part (1) to a component, said sleeve comprising a bead (2.1) on the internal surface (1.3) of the wall (1.2) for receiving a sealing element, wherein the bead (2.1) is in the shape of a groove and is delimited by a first bead flank (2.2), which is assigned to the end (1.5) of the pipe or tubular moulded part (1), a bead base (2.3) and a second bead flank (2.4), which is remote from the end (1.5) of the pipe or tubular moulded part (1), which are formed by the internal surface (1.3) of the wall (1.2) of the pipe or tubular moulded part (1), and wherein the bead base (2.3) has a wall thickness which is greater in the region of the second bead flank (2.4) than in the region of the first bead flank (2.2), **characterised in that** the external surface (1.4) of the wall (1.2) in the region of the bead base (2.3) is in the form of a conical surface section.

2. The pipe or tubular moulded part (1) according to claim 1, **characterised in that** the wall thickness of the bead base (2.3) increases continuously from the region of the first bead flank (2.2) towards the region of the second bead flank (2.4).

3. The pipe or tubular moulded part (1) according to claim 1 or 2, **characterised in that** the wall thickness in the region of the second bead flank (2.4) is 30 to 100%, preferably 50 to 80%, greater than that in the region of the first bead flank (2.2).

4. The pipe or tubular moulded part (1) according to one of the preceding claims, **characterised in that** the internal surface (1.3) and the external surface (1.4) form an angle of 5 to 25°, preferably of 8 to 20°, in the region of the bead base (2.3).

5. The pipe or tubular moulded part (1) according to one of the preceding claims, **characterised in that** all the radii on the sleeve (2) are rounded.

6. The pipe or tubular moulded part (1) according to one of the preceding claims, **characterised in that** the wall contains or consists of a polymer material, wherein the polymer material is selected from a polyolefin, preferably a polypropylene (PP) or a polyethylene (PE) or a polybutylene (PB), a crosslinked polyolefin, preferably a crosslinked polyethylene (PE-X), a polyvinyl chloride, a polyamide, a polyester, a polystyrene, a polycarbonate, a polyacetate, a polyurethane, an ABS (acrylonitrile-butadiene-styrene), a polyether, a polyketone, a mixture that can be produced from these, a copolymer that can be produced from these and a mixed composition that can be produced from these.

7. The pipe or tubular moulded part (1) according to one of claims 1 to 6 having at least two sleeves (2).

8. The pipe or tubular moulded part (1) according to claim 7, which is in the form of a double-socketed sleeve (3) or slip-on sleeve.

9. A pipe system having a pipe or tubular moulded part (1) according to one of claims 1 to 8.

## Revendications

1. Tube ou pièce moulée tubulaire (1) comprenant un manchon (2) disposé sur une section terminale (1.1) pour la liaison fluidique du tube ou de la pièce moulée tubulaire (1) avec un élément de construction, lequel manchon présente une nervure (2.1) sur la surface intérieure (1.3) de la paroi (1.2), destinée à loger un élément d'étanchéité, la nervure (2.1) étant conçue en forme de rainure et étant délimitée par un premier flanc de nervure (2.2) qui est associé à l'extrémité (1.5) du tube ou de la pièce moulée tubulaire (1), par un fond de nervure (2.3) et par un deuxième flanc de nervure (2.4) qui est éloigné de l'extrémité (1.5) du tube ou de la pièce moulée tubulaire (1), lesquels sont formés par la surface intérieure (1.3) de la paroi (1.2) du tube ou de la pièce moulée tubulaire (1), et le fond de nervure (2.3) présentant une épaisseur de paroi qui est plus grande dans la zone du deuxième flanc de nervure (2.4) que dans la zone du premier flanc de nervure (2.2), **caractérisé en ce que** la surface extérieure (1.4) de la paroi (1.2) est réalisée dans la zone du fond de nervure (2.3) en tant qu'une surface de coupe d'enveloppe conique.

2. Tube ou pièce moulée tubulaire (1) selon la revendication 1, **caractérisé en ce que** l'épaisseur de paroi du fond de nervure (2.3) s'agrandit continuellement de la zone du premier flanc de nervure (2.2) vers la zone du deuxième flanc de nervure (2.4).

3. Tube ou pièce moulée tubulaire (1) selon la revendication 1 ou 2, **caractérisé en ce que** l'épaisseur de paroi dans la zone du deuxième flanc de nervure (2.4) est de 30 à 100%, de préférence de 50 à 80% plus grande que dans la zone du premier flanc de nervure (2.2).

4. Tube ou pièce moulée tubulaire (1) selon l'une quelconque des revendications précédentes, **caractérisé en ce que** la surface intérieure (1.3) et la surface extérieure (1.4) comprennent dans la zone du fond de nervure (2.3) un angle de 5 à 25°, de préférence de 8 à 20°.

5. Tube ou pièce moulée tubulaire (1) selon l'une quelconque des revendications précédentes, **caractérisé en ce que** tous les rayons sur le manchon (2) sont arrondis.

6. Tube ou pièce moulée tubulaire (1) selon l'une quelconque des revendications précédentes, **caractérisé en ce que** la paroi contient une matière polymère ou en est constituée, la matière polymère étant sélectionnée à partir d'une polyoléfine, de préférence à partir d'un polypropylène (PP) ou d'un polyéthylène (PE) ou d'un polybutylène (PB), d'une polyoléfine réticulée, de préférence à partir d'un polyéthylène réticulé (PE-X), d'un chlorure de polyvinyle, d'un polyamide, d'un polyester, d'un polystyrène, d'un polycarbonate, d'un polyacétate, d'un polyuréthanne, d'un ABS (acrylonitrile-butadiène-styrène), d'un polyéther, d'une polycétone, d'un mélange pouvant être produit à partir de ces matières, d'un copolymère pouvant être produit à partir de ces matières et d'une composition mélangée pouvant être produite à partir de ces matières.

7. Tube ou pièce moulée tubulaire (1) selon l'une quelconque des revendications 1 à 6, comprenant au moins deux manchons (2).

8. Tube ou pièce moulée tubulaire (1) selon la revendication 7, qui est réalisé comme manchon double (3) ou comme fourreau.

9. Système de tube comprenant un tube ou une pièce moulée tubulaire (1) selon l'une quelconque des revendications 1 à 8.
